# EUROPÄISCHE PATENTANMELDUNG

(11) **EP 2 603 006 A1**
(43) Veröffentlichungstag der Anmeldung: **12.06.2013**
(21) Anmeldenummer: 12187892.0
(22) Anmeldetag: 10.10.2012
(51) Int. Cl.: H04N 17/00, H04N 7/18

(54) **Ansteuerungsvorrichtung für eine Fahrzeugumgebungsüberwachungseinrichtung**

(30) Priorität: 09.12.2011 DE 102011088139
(71) Anmelder: ROBERT BOSCH GMBH, 70442 Stuttgart (DE)
(72) Erfinder: Ehlgen, Tobias, 88212 Ravensburg (DE); Raisch, Florian, 71116 Gaertringen (DE)

(57) **Zusammenfassung**

Ansteuerungsvorrichtung für eine Fahrzeugumgebungsüberwachungseinrichtung, dadurch gekennzeichnet, dass die Ansteuerungsvorrichtung funktional mit der Fahrzeugumgebungsüberwachungseinrichtung verbunden ist, wobei mittels der Ansteuerungsvorrichtung eine Kalibrierung der Fahrzeugumgebungsüberwachungseinrichtung initiierbar ist, wobei die Initiierung der Kalibrierung mit einem von der Ansteuerungsvorrichtung erfassten Wetterkennwert korrelierbar ist.

## Beschreibung

Die Erfindung betrifft eine Ansteuerungsvorrichtung für eine Fahrzeugumgebungsüberwachungseinrichtung. Die Erfindung betrifft ferner ein Verfahren zum Initiieren einer Kalibrierung einer Fahrzeugumgebungsüberwachungseinrichtung.

### Stand der Technik

Im Kraftfahrzeugbereich sind Fahrzeugumgebungsüberwachungssysteme mit Kameras bekannt, welche aufgrund von sehr geringen optischen Brennweiten der Kameras eine Umgebung des Kraftfahrzeugs aus einer Vogelperspektive darstellen. Derartige Draufsicht- bzw. Vogelschau-Systeme weisen als Nachteil auf, dass es aufgrund von Einbaupositionen der einzelnen Kameras zu leichten Verschiebungen und damit zu Fehlkalibrierungen der Kameras bzw. der Kameras untereinander kommen kann.

Die genannten Verschiebungen können z.B. dadurch entstehen, dass die Kameras teilweise direkt in Seitenspiegeln des Kraftfahrzeugs verbaut sind, die sich aktiv bewegen lassen und durch ein Zurückbewegen eine Ausgangsposition nicht mehr exakt erreichen. Aufgrund der exponierten Einbaupositionen können die Objektive der Kameras während der Fahrt stark verschmutzt werden, weshalb die Kameras teilweise mittels einer Schutzmechanik vor Umwelteinflüssen geschützt sind. Aus den genannten Fehlkalibrierungen der Kameras kann eine Performancebeschränkung von Kalibrierungsalgorithmen resultieren, zum Beispiel bei einer Objektdetektion oder einer Fusion von Ultraschall- und Kamerabildern.

### Offenbarung der Erfindung

Es ist daher die Aufgabe der Erfindung, eine Vorrichtung zum verbesserten Kalibrieren einer Fahrzeugumgebungsüberwachungseinrichtung bereitzustellen.

Die Aufgabe wird gelöst mit einer Ansteuerungsvorrichtung für eine Fahrzeugumgebungsüberwachungseinrichtung, die dadurch gekennzeichnet ist, dass die Ansteuerungsvorrichtung funktional mit der Fahrzeugumgebungsüberwachungseinrichtung verbunden ist, wobei mittels der Ansteuerungsvorrichtung eine Kalibrierung der Fahrzeugumgebungsüberwachungseinrichtung initiierbar ist, wobei die Initiierung der Kalibrierung mit einem von der Ansteuerungsvorrichtung erfassten Wetterkennwert korrelierbar ist.

Ein Vorteil der erfindungsgemäßen Ansteuerungsvorrichtung besteht darin, dass eine Kalibrierung der Fahrzeugumgebungsüberwachungseinrichtung nur dann durchgeführt wird, wenn es ein mittels der Ansteuerungsvorrichtung erfasster Wetterkennwert zulässt. Dies hat zur vorteilhaften Folge, dass die Kalibrierung der Kameras der Fahrzeugumgebungsüberwachungseinrichtung nicht durch eine schlechte Witterung beeinträchtigt ist, so dass auf diese Weise eine wirksame Kalibrierung der Kameras durchgeführt werden kann. Kalibrierungsprozesse der Fahrzeugumgebungsüberwachungseinrichtung können vorteilhaft somit sehr effizient und zeitschonend durchgeführt werden.

Eine bevorzugte Ausführungsform der erfindungsgemäßen Ansteuerungsvorrichtung ist dadurch gekennzeichnet, dass die Ansteuerungsvorrichtung eine im Fahrzeuginnenraum angeordnete erste Kamera mit Blickrichtung nach außen ist. Durch die wettergeschützte Anordnung der ersten Kamera kann mittels der ersten Kamera ein Wetterkennwert nach objektiven Kriterien erfasst und bewertet werden. Dadurch kann eine gerade vorherrschende Wettersituation objektiv sehr gut beurteilt und für die Kalibrierung der Fahrzeugumgebungsüberwachungseinrichtung verwendet werden.

Eine vorteilhafte Weiterbildung der Ansteuerungsvorrichtung ist dadurch gekennzeichnet, dass die erste Kamera hinter einer, im Wesentlichen orthogonal zu einer Längsachse des Fahrzeugs ausgerichteten Fahrzeugscheibe angeordnet ist. Auf diese Weise können Sichtverhältnisse entweder nach vorne oder nach hinten erfasst werden, wodurch eine Erfassungsqualität des aktuell herrschenden Wetters verbessert ist. Zudem können mittels dieser Anordnung auch Strukturen in der Umgebung erkannt werden, die für eine Kalibrierung der ersten Kamera mit der Fahrzeugumgebungsüberwachungseinrichtung benutzt werden können.

Eine bevorzugte Ausführungsform der Ansteuerungsvorrichtung ist dadurch gekennzeichnet, dass die erste Kamera eine Mehrzweck-Kamera ist. Dadurch wird eine, während des normalen Fahrbetriebs des Kraftfahrzeugs üblicherweise permanent betriebene Vorrichtung mit der Fahrzeugumgebungsüberwachungseinrichtung funktionell verknüpft, um auf diese Weise sehr nützlich zu einer Initiierung einer Kalibrierung der Fahrzeugumgebungsüberwachungseinrichtung verwendet zu werden.

Eine bevorzugte Ausführungsform der erfindungsgemäßen Ansteuerungsvorrichtung ist dadurch gekennzeichnet, dass die erste Kamera bei Erkennung von Strukturen eine Kalibrierung der Fahrzeugumgebungsüberwachungseinrichtung durchführt. Somit kann vorteilhaft die erste Kamera nicht nur zu einer Initiierung der Kalibrierung, sondern auch zu einer Durchführung einer Kalibrierung der Fahrzeugumgebungsüberwachungseinrichtung verwendet werden.

Eine bevorzugte Ausführungsform der erfindungsgemäßen Ansteuerungsvorrichtung ist dadurch gekennzeichnet, dass die Kalibrierung vorzugsweise während einer Nichtverwendung der Fahrzeugumgebungsüberwachungseinrichtung durchgeführt wird. Durch die Kalibrierung während der Nichtverwendung der Fahrzeugumgebungsüberwachungseinrichtung wird vorteilhaft Zeit eingespart, so dass das System bei jeder bestimmungsgemäßen Verwendung sofort gut kalibriert zur Verfügung steht.

Die Erfindung wird im Folgenden mit weiteren Merkmalen und Vorteilen anhand von zwei Figuren detailliert beschrieben. Dabei wird auf technische Details der Fahrzeugumgebungsüberwachungseinrichtung nicht näher eingegangen, da sie für die Erfindung nicht wesentlich sind. Alle beschriebenen oder in den Figuren dargestellten Merkmale bilden für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Zeichnungen.

In den Figuren zeigt:
- Fig. 1: eine prinzipielle Darstellung eines Kraftfahrzeugs mit einer Ausführungsform der erfindungsgemäßen Ansteuerungsvorrichtung; und
- Fig. 2: eine weitere prinzipielle Darstellung eines Kraftfahrzeugs mit einer Ausführungsform der erfindungsgemäßen Ansteuerungsvorrichtung.

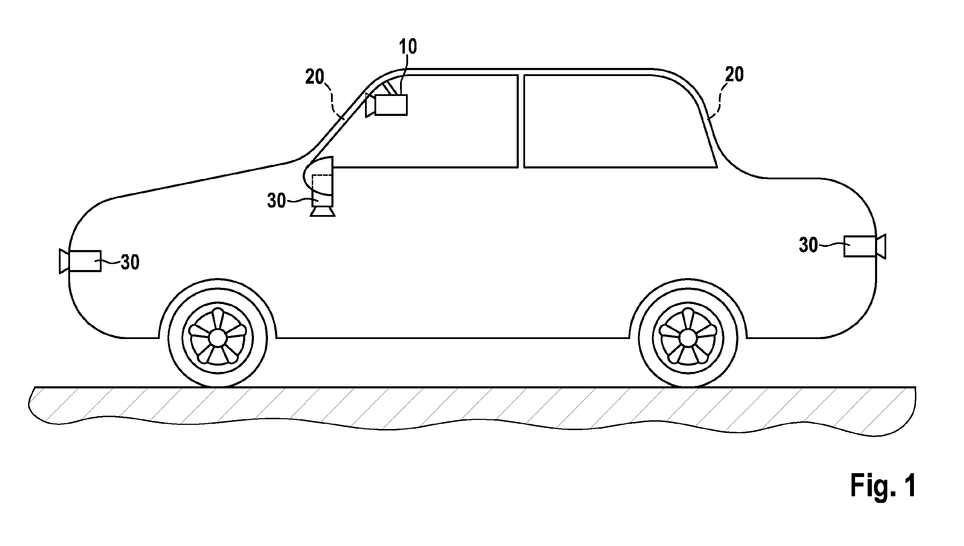

Fig. 1 zeigt in einer prinzipiellen Seitenansicht ein Kraftfahrzeug mit einer Ausführungsform der erfindungsgemäßen Ansteuerungsvorrichtung. Die Ansteuerungsvorrichtung ist vorzugsweise als eine Mehrzweck-Kamera (Multi-Purpose-Camera) 10 ausgebildet, die im Wesentlichen starr in einem Fahrzeuginnenraum hinter einer Fahrzeugscheibe 20, beispielsweise an einem Rückspiegel angeordnet ist. Denkbar ist auch, dass die erste Kamera 10 alternativ hinter einer Heckscheibe (nicht dargestellt) des Kraftfahrzeugs angeordnet ist. Möglich ist es ferner auch, jeweils eine erste Kameras 10 sowohl hinter der Windschutzscheibe als auch hinter der Heckscheibe anzuordnen, wobei die für die Initiierung der Kalibrierung jeweils am besten geeignete erste Kamera 10 selektiert wird oder auch beide erste Kameras 10 selektiert werden.

Mittels der ersten Kamera 10 werden z.B. Fahrbahnspuren, Verkehrsschilder und/oder herrschende Sichtverhältnisse während der schnellen Fahrt detektiert, wobei die erfassten Daten üblicherweise zu einer Weiterverwendung/Weiterverarbeitung in Fahrerassistenzsystemen vorgesehen sind. Eine über eine Ansteuerleitung 40 (nicht dargestellt in Fig. 1) von der ersten Kamera 10 angesteuerte Fahrzeugumgebungsüberwachungseinrichtung weist mehrere (vorzugsweise vier) zweite Kameras 30 auf, von denen jeweils eine beispielsweise in jedem Seitenspiegel des Kraftfahrzeugs, in einem Kühlergrill und in einem Kofferraumdeckel des Kraftfahrzeugs angeordnet ist. Die zweiten Kameras 30 sind, bezogen auf eine horizontale Ebene mit ungefähr 60° nach unten ausgerichtet und weisen Fischaugenobjektive mit sehr geringer Brennweite, d.h. Blickwinkel von wenigstens ungefähr 180° auf.

Die zweiten Kameras 30 können mittels herkömmlicher Algorithmen in regelmä-βigen Abständen kalibriert werden. Die Kalibrierung umfasst dabei vor allem eine geometrische Ausrichtung der einzelnen zweiten Kameras 30 bzw. eine geometrische Ausrichtung der zweiten Kameras 30 zueinander. Zu einem mechanischen Schutz bzw. zu einem Schutz vor ungünstigen äußeren Einflüssen (z.B. Niederschlag, Beschlag, Verschmutzung, usw.) sind die zweiten Kameras 30 vorzugsweise temporär mittels mechanischer Schutzeinrichtungen (nicht dargestellt) geschützt. Eine derartige Schutzeinrichtung kann beispielsweise ein Fahrzeugmarkenemblem sein, die die zweiten Kameras 30 verdecken. Bedingt durch die Tatsache, dass die in den Seitenspiegeln angeordneten zweiten Kameras 30 aufgrund vielfältiger Gründe nicht immer exakt in ihre ursprüngliche Ausgangslage zurückgeführt werden (z.B. aufgrund von Bewegungen der Seitenspiegel, nicht richtig eingerasteten Seitenspiegeln, etc.) kann eine geometrische Ausrichtung der zweiten Kameras 30 untereinander im Laufe der Zeit beeinträchtigt sein.

Erfindungsgemäß ist nunmehr vorgesehen, dass die erste Kamera 10 während eines laufenden Betriebs über die Ansteuerleitung 40 ein Initiierungssignal für eine Kalibrierung der zweiten Kameras 30 an die zweiten Kameras 30 abgibt, wenn die erste Kamera 10 einen Wetterkennwert (beispielsweise Sonnenschein, gute Sicht, kein Regen, trockene Fahrbahn, viele Objekte erkennbar, usw.) erfasst, der auf ein gutes Wetter hinweist. Als erste Reaktion auf dieses Initiierungs- bzw. Ansteuersignal wird zunächst eine mechanische Schutzeinrichtung (z.B. Schutzkappe) der zweiten Kameras 30 zurückgefahren und danach eine Kalibrierung der zweiten Kameras 30 mit konventionellen Mitteln durchgeführt. Aufgrund der Tatsache, dass die erste Kamera 10 wettergeschützt im Fahrzeuginnenraum hinter einer im Wesentlichen stets gut gereinigten Windschutzscheibe angeordnet ist, kann eine verlässliche Beurteilung der herrschenden Wetterverhältnisse gemacht werden. Diese Beurteilung der herrschenden Wettersituation kommt den zweiten Kameras 30 insofern zugute, als nur dann eine Kalibrierung initiiert wird, wenn es die Wetterumstände sinnvoll erscheinen lassen. Im Ergebnis sind daher unwirksame/teilwirksame Kalibrierungsvorgänge (beispielsweise aufgrund von verschmutzten Objektiven) der zweiten Kameras 30 von vorneherein ausgeschlossen.

Als eine weitere mögliche Funktionalität der ersten Kamera 10 ist es auch denkbar, dass von der ersten Kamera 10 detektierte Strukturen (z.B. Fahrbahnspuren, Landschaftsmerkmale, etc.) dazu benutzt werden, um die zweiten Kameras 30 bestimmungsgemäß auszurichten bzw. bestimmungsgemäß gegeneinander auszurichten. Dieser Aspekt kann von der vorgehend beschriebenen Initiierung der Kalibrierung völlig unabhängig sein, so dass vorteilhaft eine Kalibrierung der zweiten Kameras 30 auch entkoppelt von einer Berücksichtigung von Witterungsaspekten durchgeführt werden kann.

Vorzugsweise können von der ersten Kamera 10 zeitliche Intervalle zwischen den einzelnen Initiierungs- bzw. Kalibrierungsvorgängen eingestellt werden. Dies kann bedeuten, dass beispielsweise ungefähr alle zwei Stunden bzw. immer dann, wenn die Seitenspiegel des Kraftfahrzeugs eine vordefinierte Bewegungshäufigkeit überschritten haben, ein Kalibrierungsvorgang bzw. ein Versuch eines Kalibrierungsvorgangs initiiert bzw. durchgeführt wird. Die Initiierung der Kalibrierung bzw. die Kalibrierung wird vorteilhaft immer nur dann durchgeführt, wenn die Fahrzeugumgebungsüberwachungseinrichtung in Form der zweiten Kameras 30 gerade nicht bestimmungsgemäß (zum Beispiel als Einparkhilfe bei geringen Randabständen) verwendet wird. Vorteilhaft steht somit die Fahrzeugumgebungsüberwachungseinrichtung, wenn sie gebraucht wird, im Wesentlichen stets einwandfrei kalibriert zur Verfügung.

Aufgrund der Tatsache, dass die erste Kamera 10 im Wesentlichen starr angeordnet und in der Regel stets sehr gut kalibriert ist, kann solcherart eine sehr gute Kalibrierungsreferenz für die zweiten Kameras 30 bereitgestellt werden. Erfindungsgemäß wird also eine gut kalibrierte, im Wesentlichen starr angeordnete Mehrzweckkamera benutzt, um die lageempfindlichen zweiten Kameras 30 auszurichten. Somit profitiert das System der zweiten Kameras 30 in vorteilhafter Weise von einer sehr gut ausgerichteten Kalibrierungsreferenz in Form der ersten Kamera 10.

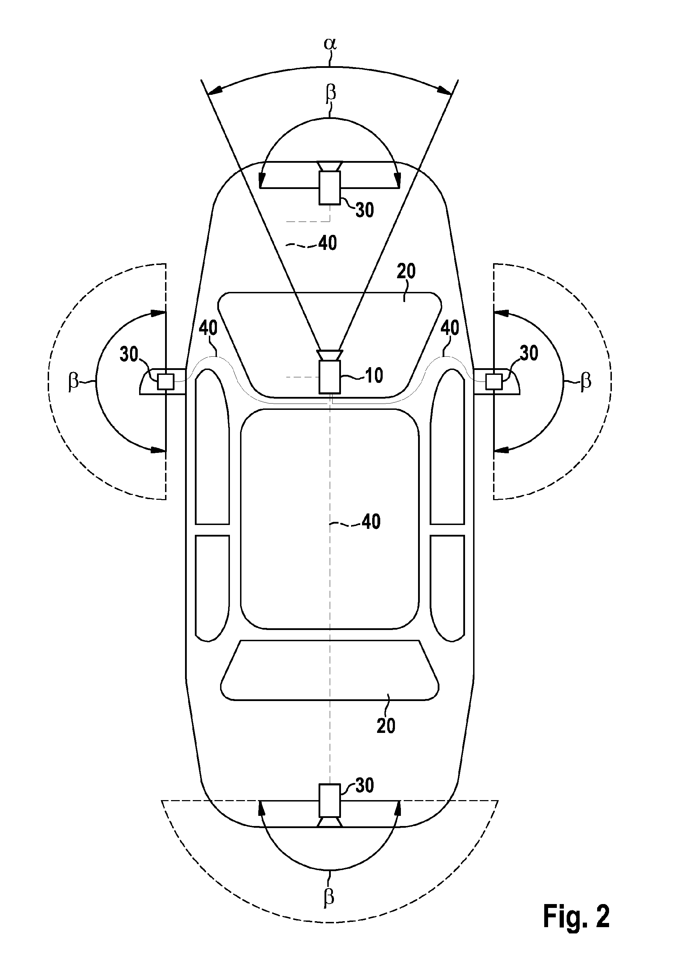

Fig. 2 zeigt eine prinzipielle Darstellung eines Kraftfahrzeugs in Draufsicht mit einer Ausführungsform der erfindungsgemäßen Ansteuerungsvorrichtung. Es ist erkennbar, dass die erste Kamera 10 einen geringeren Blickwinkel α aufweist, als jede der zweiten Kameras 30 mit jeweils einem optischen Blickwinkelβ. Aufgrund der großen Blickwinkel β der zweiten Kameras 30 ist es somit möglich, dass von der ersten Kamera 10 und den zweiten Kameras 30 Strukturen der Umgebung gemeinsam detektiert werden. Auf diese Weise können die gemeinsam erkannten Strukturen verwendet werden, um die zweiten Kameras 30 zu kalibrieren bzw. gegeneinander und/oder mit der ersten Kamera 10 zu kalibrieren.

Zusammenfassend wird mit der Erfindung eine Ansteuerungsvorrichtung für eine Fahrzeugumgebungsüberwachungseinrichtung vorgeschlagen, welche es erlaubt, eine Initiierung einer Kalibrierung bzw. einer Kalibrierung der Fahrzeugumgebungsüberwachungseinrichtung nach einem objektiv erfassbaren, technisch sinnvollen Kriterium durchzuführen, welches es erlaubt, die Kalibrierungsprozesse ressourcenschonend durchzuführen. Zu diesem Zweck wird eine Mehrzweck-Kamera funktional an ein System aus Vogelschau-Kameras gekoppelt, wobei mittels der Mehrzweck-Kamera eine Initiierung der Kalibrierung bzw. eine Kalibrierung der Vogelschau-Kameras jeweils nur dann durchgeführt wird, wenn äu-βere Witterungsumstände dies sinnvoll erscheinen lassen. Eine Verschmutzung der Objektive der Vogelschau-Kameras wird dadurch vorteilhaft verringert, wodurch die Vogelschau-Kameras seltener gereinigt werden müssen und dadurch eine Funktionsdauer vorteilhaft verlängert sein kann.

Ein Fachmann wird die beschriebenen Merkmale der Erfindung in geeigneter Weise je nach Anwendungsfall abändern und kombinieren, ohne vom Kern der Erfindung abzuweichen.

## Patentansprüche

1. Ansteuerungsvorrichtung für eine Fahrzeugumgebungsüberwachungseinrichtung, **dadurch gekennzeichnet, dass** die Ansteuerungsvorrichtung funktional mit der Fahrzeugumgebungsüberwachungseinrichtung verbunden ist, wobei mittels der Ansteuerungsvorrichtung eine Kalibrierung der Fahrzeugumgebungsüberwachungseinrichtung initiierbar ist, wobei die Initiierung der Kalibrierung mit einem von der Ansteuerungsvorrichtung erfassten Wetterkennwert korrelierbar ist.

2. Ansteuerungsvorrichtung nach Anspruch 1, **dadurch gekennzeichnet, dass** die Ansteuerungsvorrichtung eine im Fahrzeuginnenraum angeordnete erste Kamera (10) mit Blickrichtung nach außen ist.

3. Ansteuerungsvorrichtung nach Anspruch 2, **dadurch gekennzeichnet, dass** die erste Kamera (10) hinter einer, im Wesentlichen orthogonal zu einer Längsachse des Fahrzeugs ausgerichteten Fahrzeugscheibe (20) angeordnet ist.

4. Ansteuerungsvorrichtung nach Anspruch 3, **dadurch gekennzeichnet, dass** die erste Kamera (10) eine Mehrzweck-Kamera ist.

5. Ansteuerungsvorrichtung nach einem der Ansprüche 2 bis 4, **dadurch gekennzeichnet, dass** die erste Kamera (10) bei Erkennung von Strukturen eine Kalibrierung der Fahrzeugumgebungsüberwachungseinrichtung durchführt.

6. Ansteuerungsvorrichtung nach einem der Ansprüche 1 bis 5, **dadurch gekennzeichnet, dass** die Kalibrierung vorzugsweise während einer Nichtverwendung der Fahrzeugumgebungsüberwachungseinrichtung durchgeführt wird.

7. Verfahren zum Initiieren einer Kalibrierung einer Fahrzeugumgebungsüberwachungseinrichtung mittels einer Ansteuerungsvorrichtung, aufweisend:
- Erfassen wenigstens eines Wetterkennwerts mittels der Ansteuerungsvorrichtung; und
- Initiieren der Kalibrierung der Fahrzeugumgebungsüberwachungseinrichtung im Falle, dass der Wetterkennwert eine bestimmungsgemäße Funktionalität der Fahrzeugumgebungsüberwachungseinrichtung im Wesentlichen zulässt.

8. Verfahren nach Anspruch 7, wobei mittels der Ansteuerungsvorrichtung erkannte Merkmale der Fahrzeugumgebung zu einer Kalibrierung der Fahrzeugumgebungsüberwachungseinrichtung verwendet werden.

9. Verfahren nach Anspruch 8, wobei ein zeitliches Intervall zwischen den Kalibrierungsvorgängen eingestellt werden kann.

10. Verfahren nach Anspruch 8 oder 9, wobei ein zeitliches Intervall zwischen den Kalibrierungsvorgängen von einer Bewegungshäufigkeit von zweiten Kameras (30) der Fahrzeugumgebungsüberwachungseinrichtung abhängt.
